# EUROPEAN PATENT APPLICATION

(11) **EP 2 187 323 A2**
(43) Date of publication of application: **19.05.2010**
(21) Application number: 09252564.1
(22) Date of filing: 06.11.2009
(51) Int. Cl.: G06F 17/30

(54) **Information processing device, node device, method for processing reproduction information, and reproduction information processing program**

(30) Priority: 07.11.2008 JP 2008286391
(71) Applicant: Brother Kogyo Kabushiki Kaisha, Nagoya-shi, Aichi-ken 467-8561 (JP)
(72) Inventor: Hattori, Keiichiro, Aichi 467-8561 (JP)
(74) Representative: Smith, Samuel Leonard

(57) **Abstract**

An information processing device includes: a communication unit, an obtaining unit, a determination unit, and a generation unit. The communication unit communicates with node devices. The obtaining unit obtains specific information that specifies a reproduction interval on a reproduction time axis during which content data are reproduced by the node device. The determination unit determines a reproduction score related to a number of reproductions of the content data at each of a plurality of time positions on the reproduction time axis, based on the specific information obtained by the obtaining unit. The generation unit generates an output signal for outputting reproduction score information indicating the reproduction scores of the plurality of time positions, based on the reproduction score determined by the determination unit.

## Description

### CROSS-REFERENCE TO RELATED APPLICATIONS

This application claims priority from Japanese Patent Application No. 2008-286391 filed on November 7, 2008, the entire contents of which are incorporated herein by reference.

### TECHNICAL FIELD

The present invention relates to a system in which an information processing device is connectable with a plurality of node devices capable of reproducing content data via a network.

### BACKGROUND

A sever-client system or a peer-to-peer system is a system capable of delivering a multimedia content to node devices via a network such as the Internet. The content delivered by the distribution system is reproduced by individual users. Incidentally, there is a need for a survey of an audience rating in the content delivery via the network, as in a television broadcast effected by a radio wave. For example, JP-A-2002-324025 discloses a technique for surveying an audience rating of a program delivered via a network. Specifically, in order to specify an audience rating of a delivered program, a user ID assigned to the user who is now watching the program and parameters associated with the user ID are obtained at each given time. The parameters are the age, gender, occupation, hobby, and the like, of an individual user. Consequently, the technique can display an audience rating for each of the parameters with regard to each content, in accordance with the user ID of the user who is currently watching a content and the associated parameters.

### SUMMARY

However, the above-described technique does not propose a survey on an audience rating at time positions on a time axis along which content data are reproduced (hereinafter referred to as a "reproduction time axis"). Therefore, it is difficult for an audience rating survey side to determine which portions of a content are frequently viewed and popular.

The present invention was made in view of the above-described circumstances, and an object thereof is to provide an information processing device, a node device, a method for processing reproduction information, and a reproduction information processing program, which can indicate information for use in determining which portions of a content are popular.

According to a first aspect of the invention, there is provided an information processing device comprising: a communication unit configured to communicate with a plurality of node devices capable of reproducing content data along a reproduction time axis of the content data; an obtaining unit configured to obtain specific information from at least one of the plurality of node devices, the specific information that specifies a reproduction interval on the reproduction time axis during which the content data are reproduced by the at least one of the plurality of node devices; a determination unit configured to determine a reproduction score related to a number of reproductions of the content data at each of a plurality of time positions on the reproduction time axis, based on the specific information obtained by the obtaining unit; and a generation unit configured to generate an output signal for outputting reproduction score information indicating the reproduction scores of the plurality of time positions, based on the reproduction score determined by the determination unit.

According to a second aspect of the invention, there is provided a node device comprising: a reproduction unit configured to reproduce content data along a reproduction time axis of the content data; a communication unit configured to communicate with an information processing device via a network; a creating unit configured to create specific information that specifies a reproduction interval on the reproduction time axis during which the reproduction unit reproduces the content data; and an output unit configured to output the specific information through the communication unit.

According to a third aspect of the invention, there is provided a reproduction information processing program for causing a computer to function as the information processing device according to the above-described first aspect or the node device according to the above-described second aspect.

According to a fourth aspect of the invention, there is provided a reproduction information processing program for causing a computer to perform operations comprising: obtaining specific information from at least one of a plurality of node devices via a network, the specific information that specifies a reproduction interval along a content data reproduction time axis during which content data are reproduced by the at least one of the plurality of node devices; determining a reproduction score related to a number of reproduction of the content data at each of a plurality of time positions on the reproduction time axis, based on the obtained specific information; and generating an output signal for outputting reproduction score information indicating the reproduction scores of the plurality of time positions, based on the determined reproduction score.

According to a fifth aspect of the invention, there is provided a method for processing reproduction information comprising: obtaining specific information from at least one of a plurality of node devices via a network, the specific information that specifies a reproduction interval along a content data reproduction time axis during which content data are reproduced by the at least one of the plurality of node devices; determining a reproduction score related to a number of reproduction of the content data at each of a plurality of time positions on the reproduction time axis, based on the obtained specific information; and generating an output signal for outputting reproduction score information indicating the reproduction scores of the plurality of time positions, based on the determined reproduction score.

According to the above-described aspects of the invention, the operations includes: obtaining specific information from at least one of a plurality of node devices via a network, the specific information that specifies a reproduction interval along a content data reproduction time axis during which content data are reproduced by the at least one of the plurality of node devices; determining a reproduction score related to a number of reproduction of the content data at each of a plurality of time positions on the reproduction time axis, based on the obtained specific information; and generating an output signal for outputting reproduction score information indicating the reproduction scores of the plurality of time positions, based on the determined reproduction score. Therefore, it is possible to present information for determining which potions of a content are popular.

### BRIEF DESCRIPTION OF DRAWINGS

Fig. 1 is a view showing an exemplified configuration of a content delivery system of an exemplified embodiment;

Fig. 2 is a view showing an exemplified schematic configuration of a node Nn;

Fig. 3 is a view showing an exemplified reproduction log of a user "a" and an exemplified reproduction log of a user "b" in connection with a certain set of content data;

Fig. 4 is a view showing an exemplified reproduction log of a user "c" and an exemplified reproduction log of a user "d" in connection with a certain set of content data;

Fig. 5 is a view showing an exemplified schematic configuration of a center server;

Fig. 6 is a view showing exemplified data based on reproduction logs of users "a" to "d" shown in Figs. 3 and 4 and an exemplified graph showing a transition in the number of reproductions; and

Fig. 7A is a flowchart showing processing performed by the node, Fig. 7B is a flowchart showing processing performed by the center server, and Fig. 7C is a flowchart showing processing performed by a terminal or a node.

### DESCRIPTION

An exemplified embodiment of the present invention will hereinafter be described with reference to the drawings. In the exemplified embodiment described below, a content distribution system is described as an example.

(1. Content Delivery System)

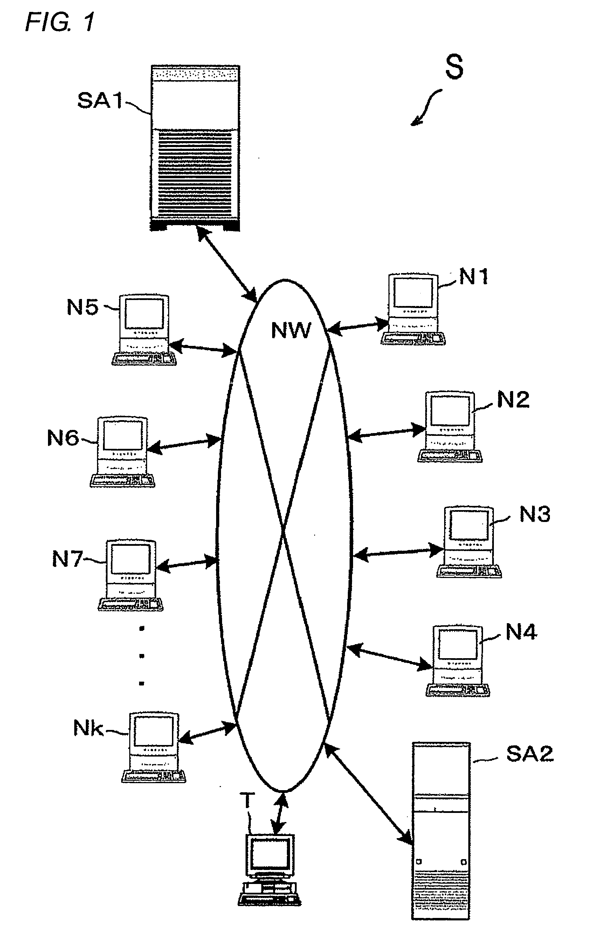

First, the configuration and function of the content delivery system of the present exemplified embodiment are described with reference to Fig. 1, and the like.

As shown in Fig. 1, a content delivery system S includes a content delivery server SA1, a center server SA2 (an example of an information processing device), a plurality of node devices Nn ("n" = any of 1, 2, 3, ..., k). The node devices Nn are hereinafter simply referred to as nodes. The nodes are connected to a network NW such as the Internet. Each of the content delivery server SA1, the center server SA2, and the nodes Nn are assigned a unique production number and an IP (Internet Protocol) address.

The content delivery sever SA1 stores various content data pertaining to different contents in a given file format. For example, content data, such as a movie, a program, music, and a document, are stored. In response to a request from the node Nn connected via the network NW, the foregoing content data are delivered. A mode for delivering content data may also be on-demand delivery, streaming, or broadcast delivery.

Each of the sets of content data is assigned a unique content ID. The content ID is one that enables unique identification of one content. For example, one program can uniquely be identified even by a set of data, such as a start time and an end time of a channel broadcast of a television broadcast. The data set may also be used as a content ID.

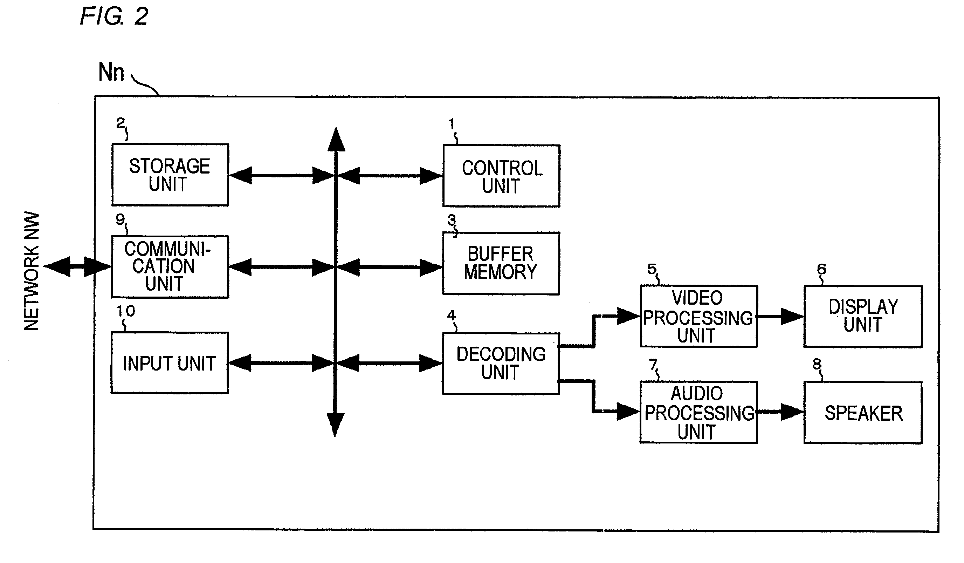

The configuration and function of the node Nn will be described with reference to Fig. 2.

As shown in Fig. 2, each of the nodes Nn includes a control unit 1; a storage unit 2; buffer memory 3; a decoding unit 4; a video processing unit 5; a display unit 6; an audio processing unit 7; a speaker 8; a communication unit 9; and an input unit 10. The control unit 1, the storage unit 2, the buffer memory 3, the decoding unit 4, the communication unit 9, and the input unit 10 are connected to each other via a bus. A personal computer, an STB (Set-top Box), and the like, are applicable to the node Nn. The control unit 1 includes a CPU having an arithmetic function, working RAM, ROM for storing various data and programs, and others. The storage unit 2 is built from an HD (hard disk drive), or the like, for storing various data, programs, and others. The buffer memory 3 temporarily stores content data, and the like, received from the content delivery server SA1.

The decoding unit 4 decodes encoded video data (video information), encoded audio data (audio information), and the like, included in the content data. Specifically, the decoding unit 4 performs expansion, decoding, and the like, of data. The video processing unit 5 subjects decoded video data, and the like, to predetermined rendering processing and outputs a processing result as a video signal. The display unit 6 is a CRT, a liquid-crystal display, and the like, that displays a video in accordance with a video signal output from the video processing unit 5. The audio processing unit 7 converts the decoded audio data into an analogue audio signal through D (Digital)/A (Analogue) conversion; amplifies the audio signal by use of an amplifier; and outputs the thus-amplified audio signal. The speaker 8 outputs the audio signal output from the audio processing unit 7 as an acoustic wave. The communication unit 9 controls communication of information between the content delivery server SA1, the center server SA2, and the like, via the network NW. The input unit 10 receives a command from the user and imparts the control unit 1 with a command signal responsive to the command. The input unit 10 includes, for example, a keyboard and a mouse or a remote controller and an operation panel.

The storage unit 2 stores address information used for establishing a connection with the content delivery server SA1 and address information used for establishing a connection with the center server SA2. The address information is, for example, an IP address, a port number, and the like.

The control unit 1 sends a request for the content data designated by the user to the content delivery server SA1 via the input unit 10. The control unit 1 performs receiving processing for receiving content data transmitted in response to the request. The content data are sent after having been packed into a packet. Each of the packets is received via the communication unit 9 and accumulated in the buffer memory 3. Under reproduction control of the control unit 1, the thus-accumulated content data are read from the buffer memory 3 and reproduced and output through the decoding unit 4, the video processing unit 5, the audio processing unit 7, the display unit 6, and the speaker 8. Alternatively, under write control of the control unit 1, the thus-accumulated content data are read from the buffer memory 3 and stored and saved in the storage unit 2. Subsequently, in accordance with an operation command from the user input from the input unit 10, the content data are read from the storage unit 2 under reproduction control of the control unit 1 and reproduced and output by the decoding unit 4, the video processing unit 5, the audio processing unit 7, the display unit 6, and the speaker 8. Thereby, the user can watch a content.

Incidentally, in the present exemplified embodiment, a mode for reproducing content data is normal reproduction and special reproduction. In accordance with the operation command from the user input from the input unit 10, the control unit 1 switches between normal reproduction and special reproduction. Normal reproduction corresponds to information showing that content data have normally been reproduced. Special reproduction corresponds to information showing that content data have specially been reproduced. Normal reproduction signifies single speed reproduction. Special reproduction signifies trick play. The "trick play" includes fast-forward reproduction, rewind reproduction, slow reproduction, a seek (jump), and the like.

The control unit 1 stores in the storage unit 2 a reproduction log including normal reproduction interval information and special reproduction interval information. The reproduction log of the present exemplified embodiment is an exemplified piece of reproduction interval specification information. The normal reproduction interval information shows an interval during which content data are normally reproduced, along a time axis by which content data are reproduced (hereinafter referred to as a "reproduction time axis"). The special reproduction interval information shows an interval during which content data are specially reproduced, along the reproduction time axis. For example, a certain set of content data is assumed to have been reproduced in sequence of normal reproduction, special reproduction, and normal reproduction. In this case, the reproduction log includes information for specifying a normal reproduction start position on the reproduction time axis, information for specifying a normal reproduction end position on the reproduction time axis, information for specifying a special reproduction start position on the reproduction time axis, and information for specifying a special reproduction end position on the reproduction time axis. The word "position" explained above designates an offset position. For example, the position signifies a time location spaced apart from a reproduction start position on the reproduction time axis. For example, the term "offset position" means a time location spaced apart from a position where content data are first reproduced.

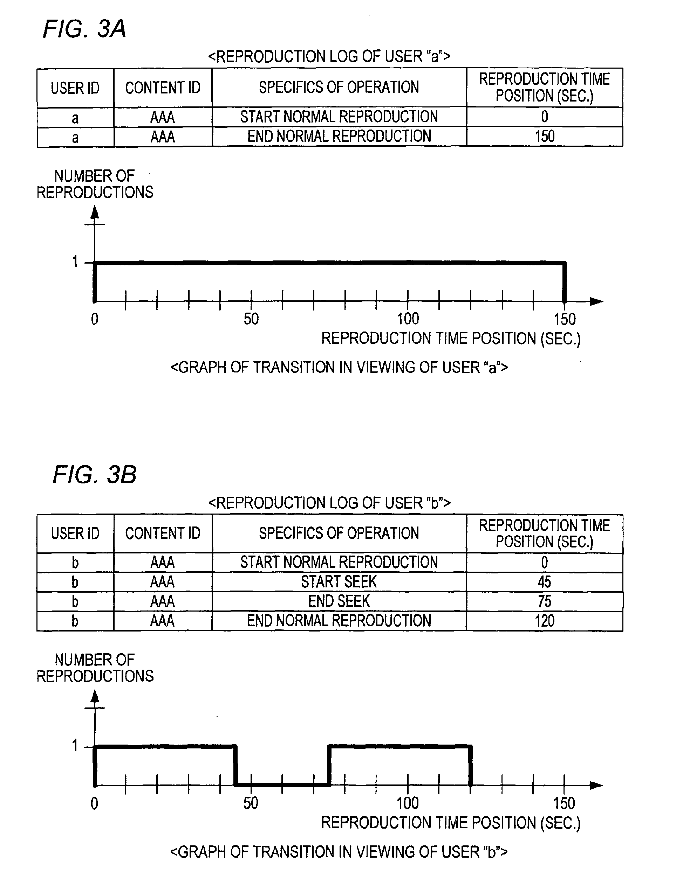

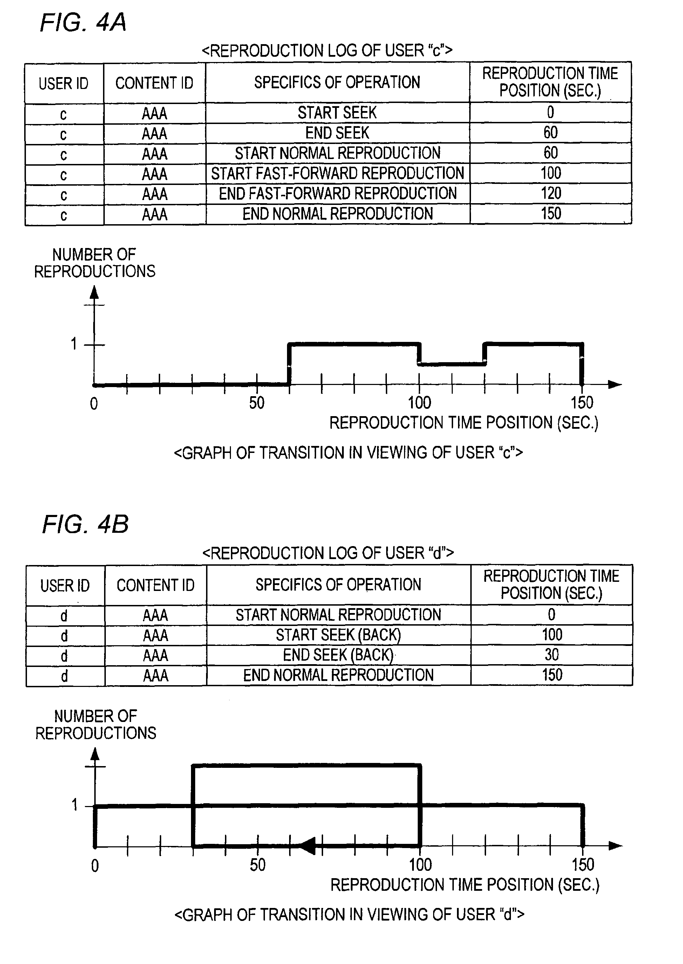

The examples shown in Figs. 3 and 4 show reproduction logs pertaining to content data that are assigned a content ID AAA and that have a reproduction time length of 150 seconds.

First, as shown in Fig. 3A, the user "a" has continually performed normal reproduction from a start position(0 second) where reproduction of content data is started to an end position (150 seconds) where reproduction of content data is completed. The user "a" has not performed special reproducing operation during that period. Therefore, the reproduction log of the user "a" includes information showing the normal reproduction start position (0 second) and the normal reproduction end position (150 seconds).

As shown in Fig. 3B, the user "b" has performed normal reproduction from the start time position (0 second) where reproduction of content data is started (hereinafter often called a "content reproduction time position") to 45 seconds. The user "b" has not watched the content by skipping data through seek operation from a content reproduction time position of 45 seconds to 75 seconds. The user "b" has again performed normal reproducing operation from a content reproduction time position of 75 seconds to 120 seconds. Subsequently, the user "b" has performed neither normal reproducing operation nor special reproducing operation. Specifically, the user "b" has not performed viewing action. Therefore, the reproduction log of the user "b" includes information showing the normal reproduction start position (0 second), a seek special reproduction start position (45 seconds), a seek special reproduction end position (75 seconds), and a normal reproduction end position (120 seconds).

As shown in Fig. 4A, the user "c" has not performed watching action by skipping data from a time position (0 second) where reproduction of content data is started to 60 second by the seek operation. The user "c" has performed normal reproducing operation from a content data reproduction time position of 60 seconds to 100 seconds. The user "c" has performed fast-forward reproduction that is twice faster than the normal reproduction speed, from a content data reproduction time position of 100 seconds to 120 seconds. Specifically, content data are reproduced at speed determined by multiplying normal reproduction speed by a speed multiplying factor "2." The user "c" has again performed normal reproduction from a content data reproduction time position of 120 seconds to 150 seconds. Therefore, the reproduction log of the user "c" includes information showing a start position for special seek reproduction (0 second), an end position for special seek reproduction (60 seconds), a normal reproduction start position (60 seconds), a special position (100 seconds) for double-speed fast-forward special reproduction, an end position for double-speed fast-forward special reproduction (120 seconds), and a normal reproduction end position (150 seconds).

As shown in Fig. 4B, the user "d" has performed normal reproduction from a time position where reproduction of content data is started (0 second) to 100 seconds. After normal reproduction has been performed, the content is subjected to seek operation (rewound) from a position of 100 seconds to a position of 30 seconds. The user "d" has then performed normal reproduction from a position of 30 seconds to the end (150 seconds). Therefore, the user "d" is considered to have viewed the content twice from a content reproduction time position of 30 seconds to 100 seconds. In this case, the reproduction log of the user "d" includes information showing a normal reproduction start position (0 second), a start position for special seek (rewinding)reproduction (100 seconds), an end position for special seek (rewinding) reproduction (30 seconds), and a normal reproduction end position (150 seconds).

The control unit 1 sends such a reproduction log and log information, which includes a content ID corresponding to the reproduction log and a user ID, to the center server SA2 at predetermined timing. The user ID is identification information unique to each user. Log information may also include a node ID unique to each of the nodes Nn in place of the user ID. Further, it is better for the center server SA2 to be able to specify at least a normal reproduction interval along the reproduction time axis during which the content are reproduced. The reason for this is that, so long as a normal reproduction interval can be specified, a remaining interval can be estimated as a special reproduction interval. It may also be a case where only information showing a normal reproduction start position is sufficient as the reproduction log. Specifically, when information showing a normal reproduction end position is not included, all you have to do is to consider that the content data have been reproduced to its end. Further, if information showing a normal reproduction start position and information showing a special reproduction start position are available, a normal reproduction interval can be specified. In the meantime, a remaining interval can be estimated as a special reproduction interval. Further, information showing a reproduction time may also be stored as log information in place of the information showing a normal reproduction end position and a special reproduction end position. In this case, a reproduction end position can be specified from both a reproduction start position and a reproduction time. Moreover, information showing a reproduction time may also be stored as log information in lieu of information showing a normal reproduction start position and a special reproduction start position. In this case, a reproduction start position can be specified by a reproduction end position and a reproduction time.

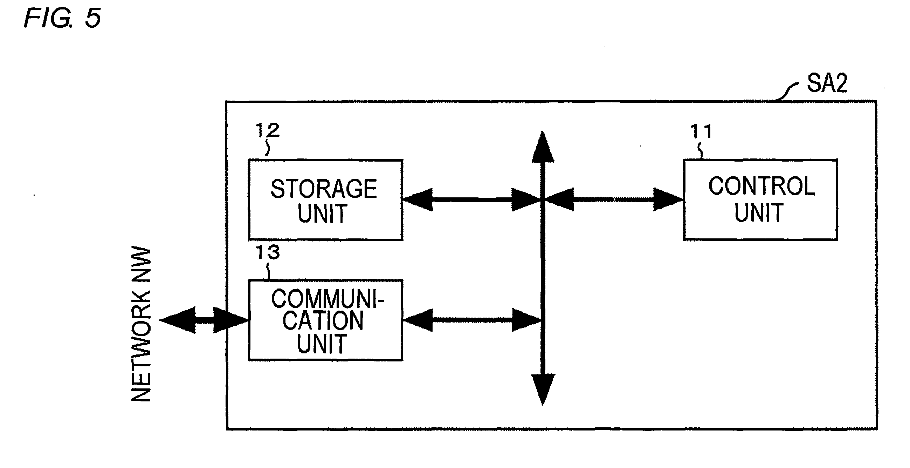

The configuration and function of the center server SA2 will now be described with reference to Fig. 5, and the like.

As shown in Fig. 5, the center server SA2 includes a control unit 11, a storage unit 12, and a communication unit 13. The control unit 11, the storage unit 12, and the communication unit 13 are connected together via a bus. A terminal T used by a system manager, a content provider, and the like, is connected to the center server SA2 via the communication unit 13 (the system manager or the content provider using the terminal T is hereinbelow called a "manager"). The terminal T includes an unillustrated display device. The reproduction information output processing program may also be downloaded, for example, from a predetermined server in the network NW. The reproduction information output processing program may also be recorded in a recording medium, such as CD-ROM, and read by a drive for the recording medium. The control unit 11 is a computer including a CPU having arithmetic operation function, working RAM, ROM storing various data and programs (including a reproduction information output processing program of the present invention). The storage unit 12 includes an HD (hard disk drive) for storing various data and programs, and the like. The communication unit 13 performs communication control of information between the center server and the nodes Nn, and the like, via the network NW.

In such a configuration, the control unit 11 performs centralized control of the entirety by the CPU which reads a program stored in the storage unit 12, and the like. Therefore, the control unit 11 is operable as an information obtaining unit, a reproduction count computing unit, an output unit, and the like.

Specifically, the control unit 11 obtains the log information, e.g., from each of the nodes Nn, and specifies a normal reproduction interval and a special reproduction interval along the reproduction time axis on per-log-information basis. For example, according to log information (a reproduction log) obtained from the node Nn of the user "b" shown in Fig. 3B, an interval from zero second to 45 seconds and an interval from 75 seconds to 120 seconds are specified as normal reproduction intervals. An interval from 45 seconds to 75 seconds is specified as a special reproduction interval.

In accordance with the thus-specified normal reproduction interval and the special reproduction interval, the control unit 11 performs summarization processing. The control unit 11 determines a count of times reproducing operation is performed every period, along the reproduction time axis. Every period along the reproduction time axis means, for example, a one-second increment. A count of times reproduction is performed is put into another word; namely, a count of times a content is viewed. For example, in the present exemplified embodiment, the number of reproducing operation is counted one in a normal reproduction interval. In the meantime, in the special reproduction interval, the content is deemed not to have been viewed by the user, and the count of times a content is reproduced is determined to be zero. Thus, counting is not performed. However, even in the special reproduction interval, a content is deemed to have been viewed when the fast-forward reproduction is performed. Specifically, in the fast-forward reproduction, the content is reproduced at a speed higher than the normal reproduction speed, in other words, the content is reproduced at a speed determined by multiplying the normal reproduction speed by a speed multiplying factor "m" (m>1).
The server may also be configured in such a way that, in relation to one fast-forward reproduction, a value determined by multiplying by one a ratio that is related to a speed multiplying factor "m" and that ranges from 0% to 100% (e.g., 1/m) is counted as the number of times a content is watched. For example, in the case of double-speed fast-forward reproduction, there is counted a value of 0.5 determined by multiplying a ratio of 50% (1/2) corresponding to a speed multiplying factor "2" by one. Viewing is determined while fast-forward reproduction is deemed to be watching action at a given proportion. The count of times a content is reproduced can thereby be determined while fast-forward reproduction is also deemed to be watching action at a given proportion, so that more accurate information can be provided. In other words, in the present exemplified embodiment, the score related to the number of reproductions of the content is determined. Further, as described above, the score may depend on the reproduction mode. for each of a plurality of time positions on the reproduction time axis. The plurality of time positions may be arbitrary set, and may be time points or time ranges.

Even in the special reproduction interval, slow reproduction can also be said to action for watching a content with special attention. Therefore, slow reproduction can be considered to be counted a larger number as compared normal reproduction. For example, the server may also be configured in such a way that, in the case of slow reproduction at normal reproduction speed of "1/m" (m>1), the number of views is counted "m."

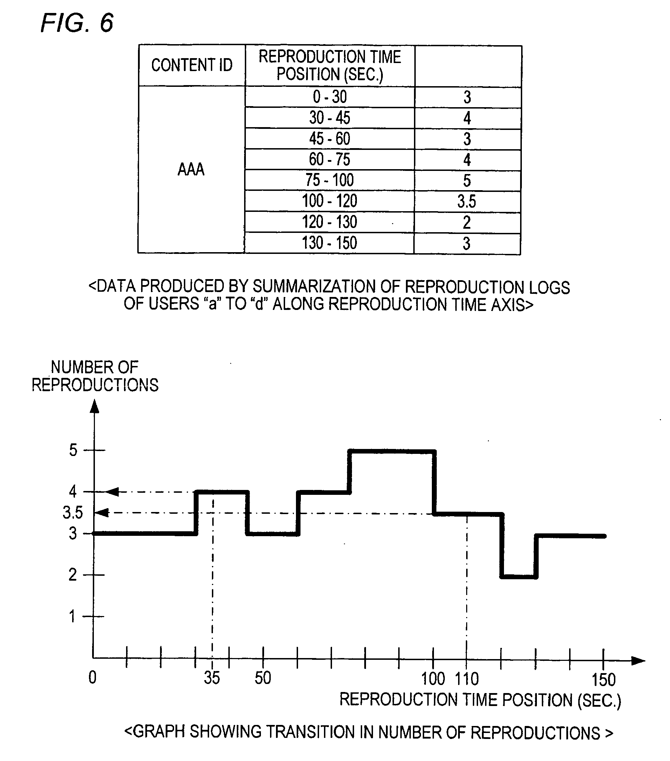

As shown in Figs. 3A and 3B, the users "a" and "b" belong to a normal reproduction interval for example, at a reproduction time position of 35 seconds on the reproduction time axis. Therefore, each of the normal reproducing operations is counted one as the number of watches. As shown in Fig. 4A, the user "c" is in the special reproduction interval, and hence counting is not performed. As shown in Fig. 4B, the user "d" belongs to a normal reproduction interval and has normally reproduced content data twice. Accordingly, normal reproduction is counted two as the number of watches. Consequently, as shown in Fig. 6, the count of times content data are reproduced at a reproduction time position of 35 seconds on the reproduction time axis is determined to be four. When the user lies in a boundary between the normal reproduction interval and the special reproduction interval as in the case with a reproduction time position of 45 seconds shown in Fig. 3B, the user may also be determined to belong to a normal reproduction interval. Alternatively, the user may also be determined to belong to a special reproduction interval.

As shown in Figs. 3A, 3B, and 4B, the users "a," "b," and "d" lie in the normal reproduction interval at a reproduction time position of 110 seconds on the reproduction time axis. Therefore, each of normal reproducing operations is counted one as the number of watches. As shown in Fig. 4A, the user "c" lies in a double-speed fast-forward reproduction interval. Therefore, double-speed fast-forward reproduction is counted one-and-half (one count/double speed) as the number of watches. Consequently, as shown in Fig. 6, a count of times content data are reproduced at a reproduction time position of 110 seconds on the reproduction time axis is determined as 3.5 times.

The control unit 11 outputs information based on the thus-determined count of times reproduction is performed every period. For example, the control unit 11 generates display information for causing a display to provide in time sequence information based on the thus-determined count of times reproduction is performed every period. The control unit 11 outputs the thus-generated display information to a terminal T or a node Nn having the display. As shown for example, in Fig. 6, a graph showing a transition in the count of reproducing operations is provided on the display of the terminal T or the node Nn. A manager using the terminal T or the node Nn can visually ascertain, at first sight, a transition in the count of reproducing operations (in other words, the number of viewers) along the reproduction time axis by viewing the display. Further, the manager can ascertain how many times a content is viewed and time locations (in seconds) where a content is viewed. In other words, in the present exemplified embodiment, the score related to the number of reproductions of the content is determined for each of a plurality of time positions (e.g., consecutive time ranges) on the reproduction time axis.

An example of information based on a count of reproducing operations may also be the number of reproducing operations itself as shown in Fig. 6. Alternatively, information may also be determined by dividing an each determined count of reproducing operations by the number of obtained reproduction logs and by multiplying a result of division by 100%. The number of reproduction logs is; in other words, the number of viewers.

A destination to which information based on a count of reproducing operations is to be output may also be a printer (a printing machine) as well as a display. Accordingly, as shown in Fig. 6, for example, a graph showing a transition in a count of reproducing operations is printed on a sheet.

The control unit 11 may also be configured so as to determine and display the maximum count of reproducing operations and an average count of reproducing operations.

The count of reproducing operations may also be marked off for each predetermined period and determined on the basis of reproduction logs collected in that period. For example, the given period is a week, a month, or a year. The system may also be configured in such a way that a count of reproducing operations is determined not in a particularly-marked-off period but over an entire period.

(2. Operation of Content Delivery System)

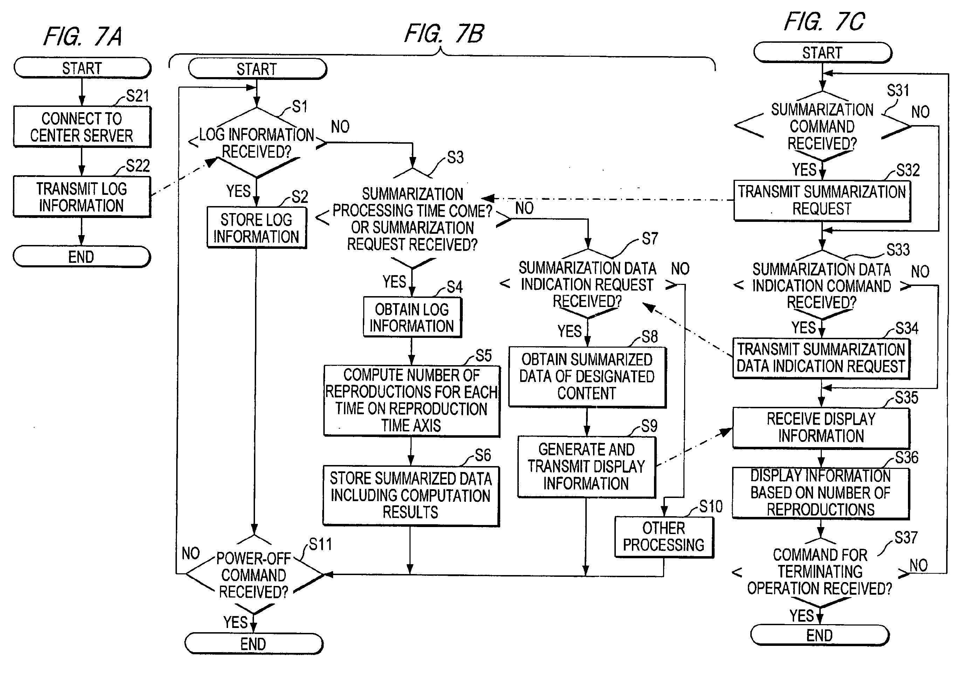

Operation of a content delivery system of the exemplified embodiment will now be described with reference to Fig. 7.

First, processing to be performed by the center server SA2 shown in Fig. 7B is commenced by activation of power of; for example, the center server SA2. The control unit 11 of the center server SA2 determines whether or not log information is received from the node Nn (step S1).

Processing pertaining to the node Nn shown in Fig. 7A is commenced, for example, when reproduction of content data is completed. After performing processing for a connection to the center sever SA2 (step S21), to thus establish a connection, the control unit 1 of the node Nn transmits to the center server SA2 log information including a content ID for the content data having finished being reproduced, a reproduction log of the data, and a user ID (step S22). The control unit 1 of the node Nn completes processing.

Processing pertaining to the node Nn shown in Fig. 7A may also be configured so as to be periodically commenced. For example, processing is started every other day when a preset time has come. In this case, log information stored from when previous processing was performed until when current processing is started is collectively transmitted to the center server SA2. Processing pertaining to the node Nn shown in Fig. 7A may also be configured so as to be commenced when a log information transmission command is issued by the user through the use of the input unit 10.

Upon receipt of the log information transmitted from the node Nn (YES in step S1), the control unit 11 of the center server SA2 stores the log information in the storage unit 12 (step S2).

In the meantime, when log information is not received (NO in step S1), the control unit 11 determines whether or not a preset summarization processing time has come or whether or not a summarization request is issued by the terminal T (step S3). When an affirmative answer is obtained (YES in step S3), the control unit 11 performs processing pertaining to step S4. When a negative answer is obtained (NO is step S3), the control unit 11 performs processing pertaining to step S7.

Processing pertaining to the terminal T or the node Nn shown in Fig. 7C is commenced by an operation start command from the manager or the user. When the summarization command is input by the manager or the user (YES in step S31), the terminal T or the node Nn transmits the summarization request to the center server SA2 (step S32). The manager or the user can also specify a summarization target period (e.g., in the past year) by the terminal T or the node Nn.

In step S4, the control unit 11 of the center server SA2 determines a content for which a predetermined number of pieces of log information or more are available. The control unit 11 obtains log information about each of the thus-determined contents from the storage unit 12. When the summarization target period is specified, log information about the contents reproduced at the dates and times falling within the period is selected and obtained by the control unit 11.

The control unit 11 summarizes reproduction logs included in the obtained log information on a per-content basis. As mentioned previously, the control unit 11 determines the number of hourly reproducing operations in the reproduction time axis (step S5). The control unit 11 stores summarization data including a determination result in the storage unit 12 while associated with a content ID of a corresponding content (step S6). Thus, summarization data pertaining to respective contents are obtained.

In step S7, the control unit 11 determines whether or not a summarization data indicating request is issued by the terminal T.

When a command for submitting summarization data about a content specified by the manager or the user is input (YES in step S33), the terminal T or the node Nn transmits a request for submitting the summation data (including a content ID) to the center server SA2 (step S34).

Upon receipt of the summation data indication request thus transmitted by the node Nn (YES in step S7), the control unit 11 of the center server SA2 obtains the summation data pertaining to the specified content from the storage unit 12 (step S8). The control unit 11 generates, from the obtained summation data, display information for causing the display to indicate in time sequence information based on a count of times content data are reproduced every period. The control unit 11 transmits or outputs the display information to the terminal T or the node Nn (step S9). The terminal T or the node Nn received the display information (step S35) indicates, on the display, information based on the count of reproducing operations, for example, a graph showing a transition in count of reproducing operations, in accordance with the display information (step S36). When the manager or the user has issued an operation termination command from the terminal T or the node Nn (YES in step S37), processing shown in Fig. 7C is terminated.

Meanwhile, when there is no request for submitting summarized data in step S7 (NO in step S7), the control unit 11 performs other processing (step S10) and proceeds to step S11.

In step S11, the control unit 11 determines whether or not a power-off command is issued. When a power-off command is issued (YES in step S11), processing shown in Fig. 7B is completed. In contrast, when there is no power-off command (NO in step S11), the control unit 11 again performs processing pertaining to step S1.

As described above, according to the exemplified embodiment, information to be used for determining which potions (e.g., scenes) of a content are popular, and the like, can be presented to the manager. The manager can thereby determine, for example, in a visual manner, which portions of a contents are popular or frequently watched.

In particular, so long as the system is configured such that a count of times a content is reproduced every period or an audience rating is plotted in the form of a graph and displayed in time sequence on the display as information based on a count of reproducing operations as shown, for example, in Fig. 6, the manager or the user can ascertain at first sight a transition in count of times a content is reproduced every period along the reproduction time axis. The manger or the user can therefore ascertain how many times a content was viewed and time locations (in seconds) where a content was viewed. Moreover, even in the case of a short content which is reproduced within several minutes, a timewise transition in count of reproducing operations (a count of times a content is viewed) can be displayed in detail.

In the exemplified embodiment, as mentioned previously, the reproduction log includes information showing a start position and an end position for special reproducing operation, as well as including a mere count of watches determined by reproducing and stopping operations. As a result, it becomes possible to deem a special reproduction interval during which there is performed, for example, seek operation to be an unwatched interval, and not to count the operation as the number of reproducing operations. Thus, in consideration of special reproducing operation, the center server SA2 can submit a more detailed count of watches achieved per second.

In the exemplified embodiment, the system is configured in such a way that a single center server SA2 performs functions, such as receipt and summarization of log information and transmission of summarized data. The content delivery system S may also be configured such that individual servers perform respective functions (roles).

The present invention can also be applied to a mode in which the node Nn receives the content data transmitted by the content delivery server SA1 and reproduces the data while buffering the same. For example, when the content delivery server SA1 can control transmission of content data in accordance with a special reproduction request from the predetermined node Nn or the terminal T, the content delivery server SA1 can ascertain specifics of operation for special reproduction performed by the node Nn and a time position where reproduction is performed. Therefore, in this case, reproduction log information about content data is obtained by the content delivery server SA1. Therefore, the essential requirement is to transmit reproduction log information from the content delivery server SA1 to the center server SA2.

The exemplified embodiment has been described with reference to the configuration in which the content delivery server SA1 and the center server SA2 are separated from each other. The content delivery system S may also be configured in such a way that the content delivery server SA1 and the center server SA2 are implemented by a single server.

The exemplified embodiment has been described in connection with the exemplified embodiment for the case where the present invention is applied to a server-client content delivery system. However, the present invention can also be applied to a peer-to-peer content delivery system disclosed in US Patent Application Publication No. 2007/0283043 A1, the entire contents thereof is incorporated herein by reference. In the case of a peer-to-peer content delivery system, on-demand delivery, streaming delivery, or broadcast delivery may also be employed. When the present invention is applied to a peer-to-peer content delivery system, each of nodes Nn requesting content data searches address information about another node Nn that stores desired content data. A query about address information is sent to a root node described in connection with US Patent Application Publication No. 2007/0283043 A1. The node Nn requesting content data obtains content data from the searched node Nn. The obtained content data are reproduced. The node Nn reproduced content data stores reproduction log information about the data. The thus-stored reproduction log information is transmitted to the center server SA2.

In a peer-to-peer content delivery system, there is a case where one set of content data is divided into a plurality of pieces of content data and where the divided pieces of content data are stored in a plurality of nodes Nn in a distributed manner. In this case, when reproducing content data, the node Nn of the user who desires to watch content data sequentially obtains separated content data from the other respective nodes Nn and reproduces the data. The node Nn that reproduced a series of separated content data stores reproduction log information including information showing the start and end positions for normal reproduction and the start and end positions for special reproduction on the reproduction time axis made by connection of the separated pieces of content data. A common ID and reproduction log information assigned to the respective separated pieces of content data are transmitted to the center server SA2.

In a modification of the present exemplified embodiment, each of the nodes Nn or the terminal T may also be provided with the function of the center server SA2 of the exemplified embodiment. In this case, each of the nodes Nn or the terminal T generates display information including a graph image. The thus-generated display information is transmitted to another node Nn or the terminal T.

## Claims

1. An information processing device (SA2) comprising:
a communication unit (13) configured to communicate with a plurality of node devices (Nn) capable of reproducing content data along a reproduction time axis of the content data;
an obtaining unit (11) configured to obtain specific information from at least one of the plurality of node devices (Nn), the specific information that specifies a reproduction interval on the reproduction time axis during which the content data are reproduced by the at least one of the plurality of node devices (Nn);
a determination unit (11) configured to determine a reproduction score related to a number of reproductions of the content data at each of a plurality of time positions on the reproduction time axis, based on the specific information obtained by the obtaining unit (11);and
a generation unit (11) configured to generate an output signal for outputting reproduction score information indicating the reproduction scores of the plurality of time positions, based on the reproduction score determined by the determination unit (11).

2. The information processing device (SA2) according to claim 1, wherein the generation unit (11) comprises a display information generation unit (11) configured to generate display information indicating the reproduction score information in time sequence along the reproduction time axis.

3. The information processing device (SA2) according to claim 1 or 2, wherein the determination unit (11) accumulates the reproduction scores at each of the plurality of time positions based on a plurality pieces of the specific information.

4. The information processing device (SA2) according to any one of claims 1 to 3,
wherein the specification information comprises: reproduction interval information indicating the reproduction interval; and mode information indicating a reproduction mode in which the content data are reproduced in the reproduction interval.

5. The information processing device (SA2) according to claim 4, wherein the reproduction interval information is associated with the mode information.

6. The information processing device (SA2) according to claim 4 or 5, wherein reproduction interval information comprises a start time point of the reproduction interval and an end time point of the reproduction interval.

7. The information processing device (SA2) according to any one of claims 4 to 6,
wherein the reproduction mode comprises a normal mode in which the content data are reproduced at a normal speed; and a special mode other than the normal mode.

8. The information processing device (SA2) according to claim 7, wherein the determination unit (11) determines the reproduction score depending on the reproduction mode.

9. The information processing device (SA2) according to claim 8,
wherein the special mode comprises a fast-forward reproduction mode in which the content data are reproduced at a speed faster than a normal reproduction speed at which the content data are reproduced in the normal mode, and
wherein the determination unit (11) determines the reproduction score for the fast-forward reproduction mode lower than the reproduction score for the normal mode.

10. The information processing device (SA2) according to claim 9,
wherein in the fast-forward reproduction mode, the content data are reproduced at a speed determined by multiplying the normal reproduction speed by a speed multiplying factor "m" (m > 1), and
wherein the determination unit (11) determines the reproduction score for the fast-forward reproduction by multiplexing a value ranging from zero to one related to the speed multiplying factor "m" by the reproduction score for the normal mode.

11. A node device (Nn) comprising:
a reproduction unit (4, 5, 7) configured to reproduce content data along a reproduction time axis of the content data;
a communication unit (9) configured to communicate with an information processing device (SA2) via a network;
a creating unit (9) configured to create specific information that specifies a reproduction interval on the reproduction time axis during which the reproduction unit (4, 5, 7) reproduces the content data; and
an output unit (9) configured to output the specific information through the communication unit (9).

12. The node device (Nn) according to claim 11, wherein the specification information comprises: reproduction interval information indicating the reproduction interval; and mode information indicating a reproduction mode in which the content data are reproduced in the reproduction interval.

13. A reproduction information processing program for causing a computer to function as the information processing device (SA2) according to any one of claims 1 to 10 or the node device (Nn) according to claim 11 or 12.

14. A reproduction information processing program for causing a computer to perform operations comprising:
obtaining specific information from at least one of a plurality of node devices (Nn) via a network, the specific information that specifies a reproduction interval along a content data reproduction time axis during which content data are reproduced by the at least one of the plurality of node devices (Nn);
determining a reproduction score related to a number of reproduction of the content data at each of a plurality of time positions on the reproduction time axis, based on the obtained specific information; and
generating an output signal for outputting reproduction score information indicating the reproduction scores of the plurality of time positions, based on the determined reproduction score.

15. A method for processing reproduction information comprising:
obtaining specific information from at least one of a plurality of node devices (Nn) via a network, the specific information that specifies a reproduction interval along a content data reproduction time axis during which content data are reproduced by the at least one of the plurality of node devices (Nn);
determining a reproduction score related to a number of reproduction of the content data at each of a plurality of time positions on the reproduction time axis, based on the obtained specific information; and
generating an output signal for outputting reproduction score information indicating the reproduction scores of the plurality of time positions, based on the determined reproduction score.
